(19) **Europäisches Patentamt**
**European Patent Office**
**Office européen des brevets**

(11) **EP 2 645 816 A1**

(12) **EUROPEAN PATENT APPLICATION**

(43) Date of publication:
**02.10.2013 Bulletin 2013/40**

(51) Int Cl.:
***H05B 33/08*** (2006.01)

(21) Application number: **12162050.4**

(22) Date of filing: **29.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **NXP B.V.**
**5656 AG Eindhoven (NL)**

(72) Inventors:
• **Van den Berg, Arjan**
**Redhill, Surrey RH1 1NY (GB)**
• **Chen, Jie**
**Redhill, Surrey RH1 1NY (GB)**

(74) Representative: **Hardingham, Christopher Mark**
**NXP Semiconductors**
**Intellectual Property and Licensing**
**Red Central**
**60 High Street**
**Redhill, Surrey RH1 1SH (GB)**

Remarks:
•The references to the drawing(s) no. 9 are deemed to be deleted (Rule 56(4) EPC).
•Amended claims in accordance with Rule 137(2) EPC.

(54) **An LED driver and a method of driving LEDs**

(57)   A method of driving current from an AC power supply through a series arrangement of a varying number of strings of LEDs is disclosed, the method comprising, adding LED strings to the series arrangement in a first order during an increasing voltage part of a cycle of the AC power supply cycle and subsequently removing LED strings from the series arrangement in a second order s during a decreasing voltage part of the cycle, wherein the second order is not the reverse of the first order.

A driver for operating such a method is also disclosed, as is an IC embodying such a driver.

*Figure 4*

## Description

Field of the Invention

This invention relates to LED drivers and to methods of driving LEDs.

Background of the Invention

There is increasing interest in driving strings of LEDs directly from an alternating current (AC) power supply. An example is so-called "direct to mains" LED lighting circuits, in which an AC mains power supply is used to drive an LED lighting circuit without first being converted to a DC level.

An LED may be considered as a current sink since an approximately fixed voltage is required to drive the LED, whereas its brightness varies with the current through it. A series arrangement of any given number of LEDs thus requires a minimum fixed voltage across it in order to switch it on, and thus can only operate during a part, that is to say the high-voltage part, of the mains cycle.

In order to improve the efficiency of energy lighting units, it is known to split the series arrangement into separate, series-connected, strings. The upper LED string element is connected to the rectified mains. Taps between each of the lower strings are connected to current sources that sequentially switch on, such that the effective LED voltage follows the mains voltage as closely as possible. This configuration is generally known as a linear LED driver.

As a result of this arrangement, a higher string will be in an on-state for more of the mains cycle than will a lower string. So, on average an upper or higher LED string is brighter and a lower LED string is less bright. It is known to compensate for this by adding more LEDs to the lower string or strings. However, although this may compensate for brightness, the ageing characteristics of the LEDs in the different strings will not be uniform, and the additional LEDs will lead to higher costs..

Summary of the invention

According to a first aspect there is provided a method of driving current from an AC power supply through a series arrangement of a varying number of strings of LEDs, the method comprising, adding LED strings to the series arrangement in a first order during an increasing voltage part of a cycle of the AC power supply cycle and subsequently removing LED strings from the series arrangement in a second order s during a decreasing voltage part of the cycle, wherein the second order is not the reverse of the first order.

In embodiments the second order is the same as the first order. Since in such embodiments the LED string to be powered first, that is to say, illuminated first, is also the first to be switched off, that is to say, disconnected or unpowered, and the last LED string to be powered is also the last to be switched off, the strings are each illuminated for the same or a similar length of time. So their ageing will generally be the same or similar. In conventional methods, the first string to be illuminated is also the last to be switched off so is illuminated for a substantially longer period that the last illuminated string, which is also the first to be switched off.

Embodiments comprise switching a short-circuit across a string of LEDs to remove that string of LEDs. A short circuit is a particularly convenient way of removing, that is to say bypassing, a string, since only one switch is required.

Embodiments comprise switching between two current sources to add a string of LEDs. Alternatively, a single current source can be directed by a different route to add a string.

According to another aspect there is provided a driver for driving current from an AC power supply through a series arrangement of a varying number of strings of LEDs by adding LED strings to the series arrangement during an increasing voltage part of a cycle of an AC power supply cycle and subsequently removing LED strings from the series arrangement strings of LEDs during a decreasing voltage part of the cycle, the driver comprising at least one short-circuit connection configured to be switchably connected across a one of the strings of LEDs, and at least one current source configured to be connected to the series arrangement, and being configured to add the LED strings in a first order and remove LED strings in a second order which is not the reverse of the first order.

In embodiments the second order is the same as the first order. This generally provides the most balanced and thus the most optimal aging of the strings. In embodiments, the driver is configured to switch a short-circuit connection across a string of LEDs to remove that string of LEDs. In embodiments, the driver is configured to switch between two current sources adds a string of LEDs.

According to a further aspect there is provided an integrated circuit comprising such a driver.

According to a yet further aspect there is provided a driver for driving current from an AC power supply through a series arrangement of a varying number of strings of LEDs, the number of strings of LEDs being varied by adding LED strings to the series arrangement in a first order and subsequently removing LED strings from the series arrangement in a second order, the driver comprising a plurality of switches each configured to short-circuit at least one of the stings of LEDs.

These and other aspects of the invention will be apparent from, and elucidated with reference to, the embodiments described hereinafter.

Brief description of Drawings

Embodiments of the invention will be described, by way of example only, with reference to the drawings, in which

> figure 1 shows schematically an operating sequence of a conventional multi-string linear LED driver;
> figure 2 shows the operating sequence of the strings of an LED circuit according to figure 1;
> figure 3 shows the operating sequence of the strings of an LED circuit according an embodiment;
> figure 4 shows schematically an operating sequence of a linear LED driver according to figure 3;
> figure 5a shows an operating sequence of the strings of an LED circuit according to an embodiment;

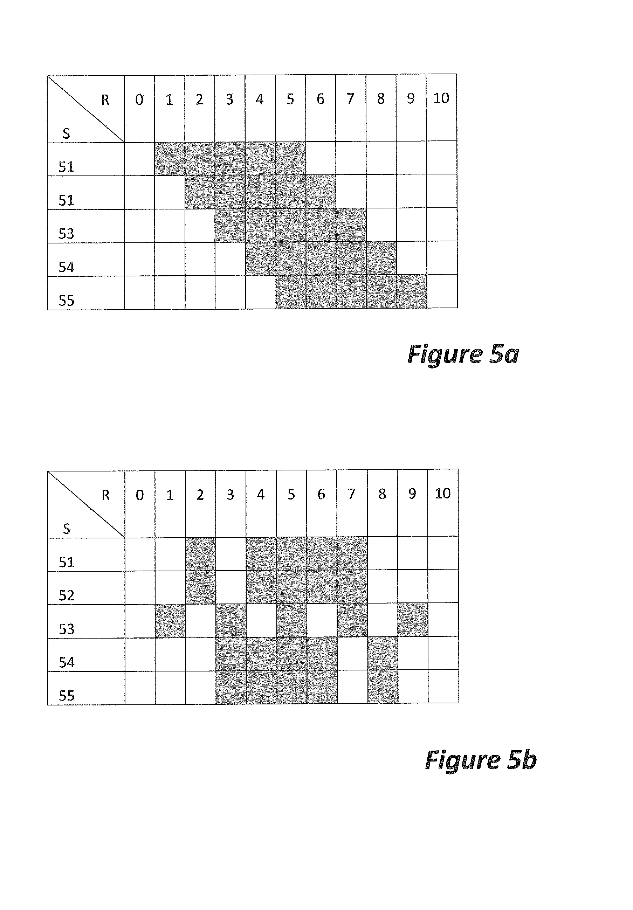

> figure 5a shows another operating sequence of the strings of an LED circuit, according to another embodiment;

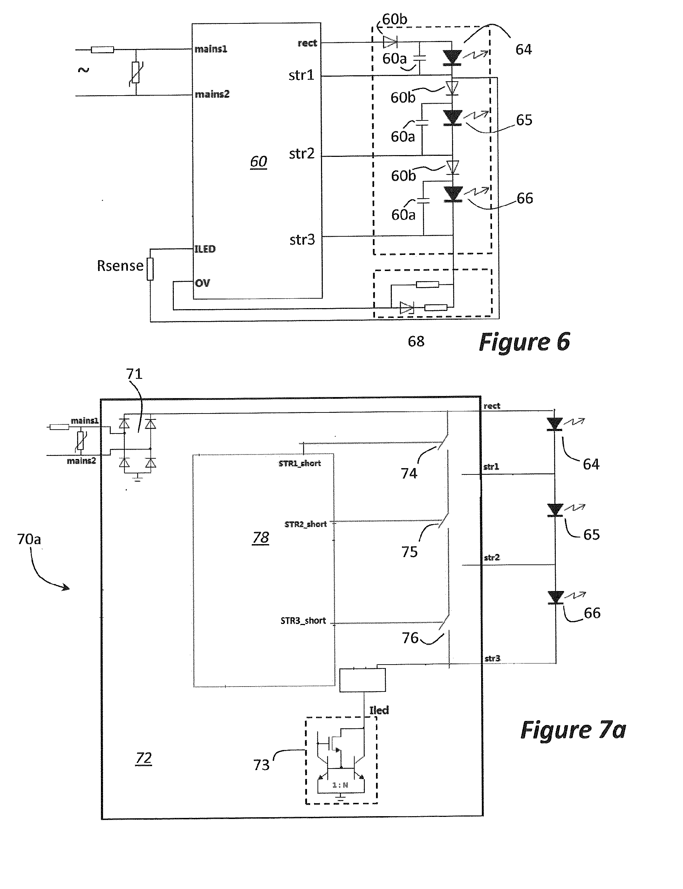

> figure 6 shows a schematic of a known LED lighting circuit;
> figure 7a shows a schematic of an LED lighting circuit according to embodiments;

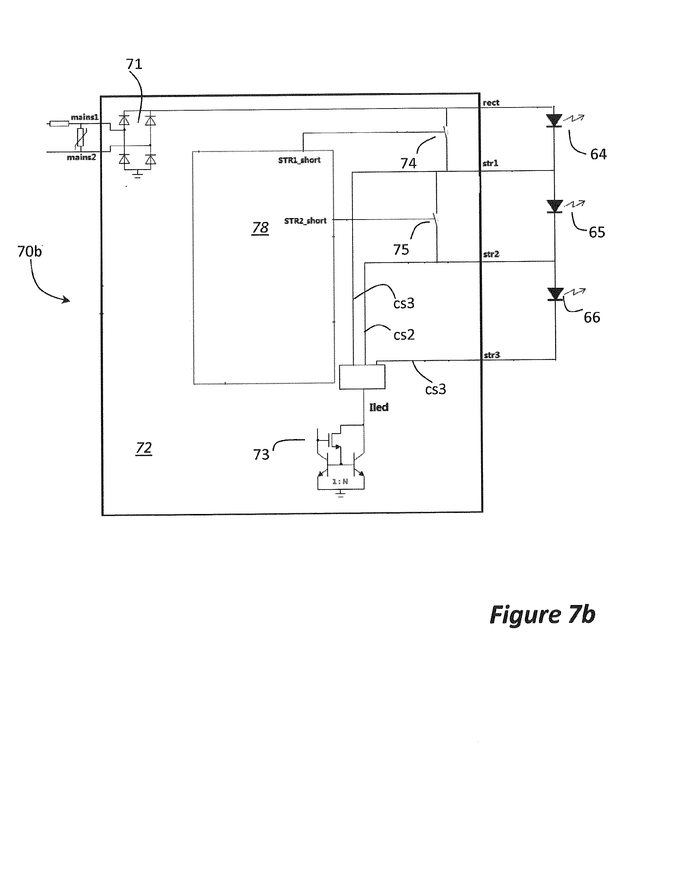

> figure 7b shows a schematic of an LED lighting circuit according to other embodiments;

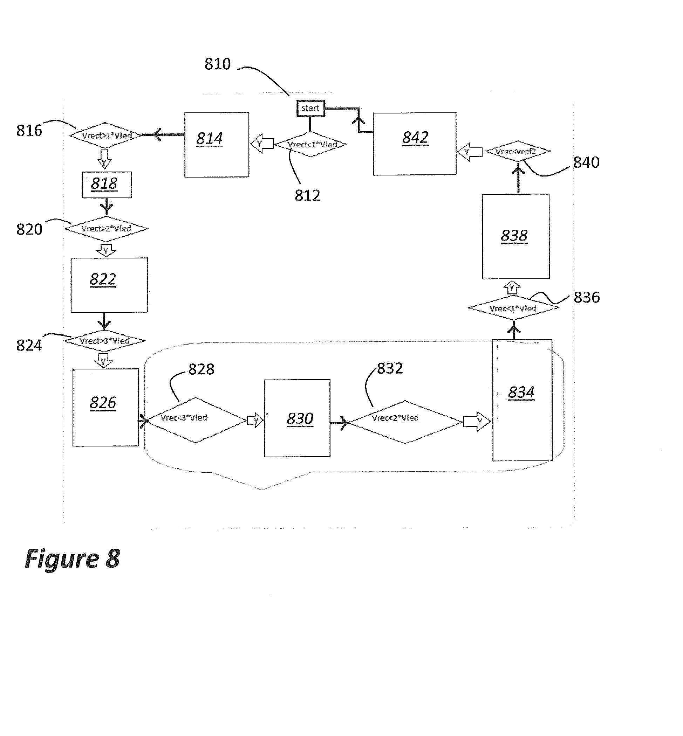

> figure 8 is a flowchart illustrating the control signals and control logic of embodiments; and
> figure 9 shows various currents and voltage is associated with figure 8.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar feature in modified and different embodiments

Detailed description of embodiments

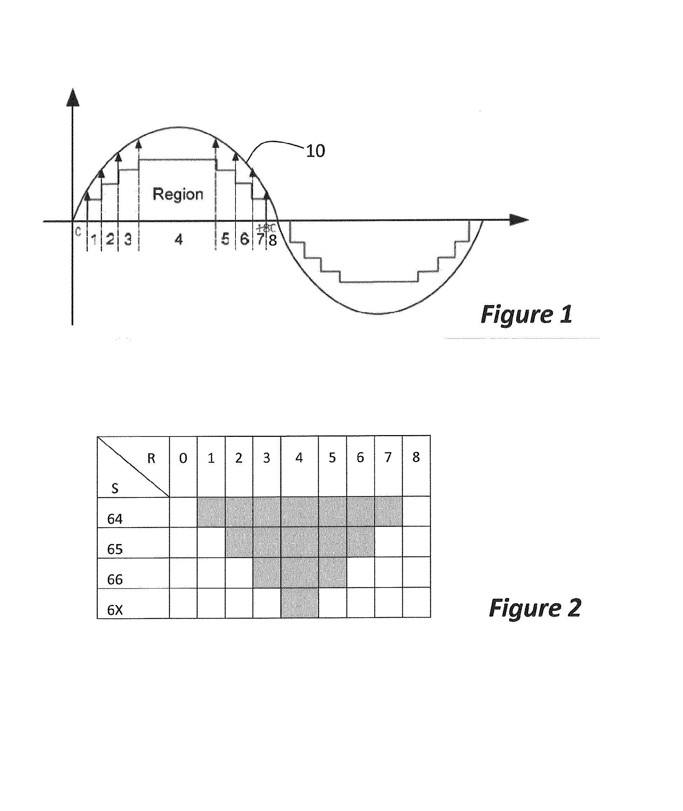

Figure 1 shows schematically an operating sequence of a conventional multi-string linear LED driver, occurring in a conventional circuit such as that shown in figure 6.
Figure 6 shows an LED driver 60, which may be configured as an integrated circuit, having as an input an AC signal, which may be a dimmed mains AC signal, across two terminals mains1 and mains2. A lighting circuit 62 comprises a series arrangement of LEDs strings 64, 65 and 66 each of which may have associated with it, as will be familiar to the skilled person, a capacitor 60a and/or a blocking diode 60b to filter for mains flicker (also known as 100Hz flicker). Although as illustrated each string ad 64, 65 and 66 is depicted as a single LED, it will be appreciated that typically each string comprises a series-connected group of LEDs. Typically 15-30 LEDs will be connected in series to comprise each string although the strings may comprise another number of LEDs. The string may comprise one or more so-called HV-LEDs, or high-voltage LEDs, in which a single package include two or more LED's connected in series. Normally, but not necessarily, each string comprises the same number of LEDs in series. One end of the end string 64 - that is, the highest string - is connected to the rectified mains by means of a terminal rect of the driver. A tap between each string is connected to the driver, as shown at str1 and str2. The further end of the lowest string 66 is connected to the driver at connection terminal str3. The actual LED current is set by means of the voltage at the input pin ILED, converted to a current by resistor Rsense, An overvoltage circuit 68, connected to an input pin OV on the driver 60, may be provided in order to protect the LEDs against a high mains voltage..
It will be noted that for convenience, only three series connected strings are shown in the circuit arrangement of figure 6; for an increased understanding the operating sequence will be described with respect to figures 1 and 2 for the case of four series-connected strings
Figure 1 shows the line voltage 10 of an AC power supply which may for instance be a mains voltage. One half-cycle of the supply is split into 9 regions, 0, 1, 2... 8. During the first region 0, starting at the zero crossing of the supply, the line voltage is insufficient to drive an LED string. At the end of this region, the line voltage reaches the first value V1, which is sufficient to drive a first string of LEDs. At this moment the string is connected to the mains by means of the tap str1. Across region 1, current is provided to the first string 64, and as the line voltage rises, the remainder of the voltage is dropped elsewhere in the circuit. At the end of region 1, the line voltage has reached a second value V2, typically V2 = 2 x V1; the line voltage is now sufficient to drive current through two strings, 64 and 65, in series. The current supply to str1 is then switched off and, instead, current is supplied to the second tap str2. During the next region 2, both first and second strings 64 and 65 are powered. Once the voltage is sufficient to power three strings, the current supply to tap str2 is switched off and the current is applied to the next tap next tap across region 3, and so on until all the strings are connected, as shown in figure 1 at region 4. As the line voltage starts to fall it becomes insufficient to power all the strings, so the strings are sequentially disconnected in the inverse order to that which they are connected, by supplying current to the taps in the opposite, that is to say the reverse, order to that in which it was supplied during the increasing voltage part of the cycle. In figure 1 this is illustrated by region 5 having 3 strings connected, region 6 having 2 strings connected and region 7 having just 1 string connected. Once the voltage is insufficient to support even one string, the current source is switched off.
Figure 2 shows the operating sequence of the strings of an LED circuit according to figure 1. This figure shows time passing from left to right, and for each of the regions R, numbered 0 to 8 discussed above, which of the strings S 64, 65, 66 and 6X (6X not being shown in figure 6) are powered. A powered string is depicted by a shaded area and an unpowered string is depicted by an un-shaded area. It is clear from this figure that string 64 is illuminated for a greater proportion of time than any of the other strings. The difference is most extreme with respect to the lowest string 6X.

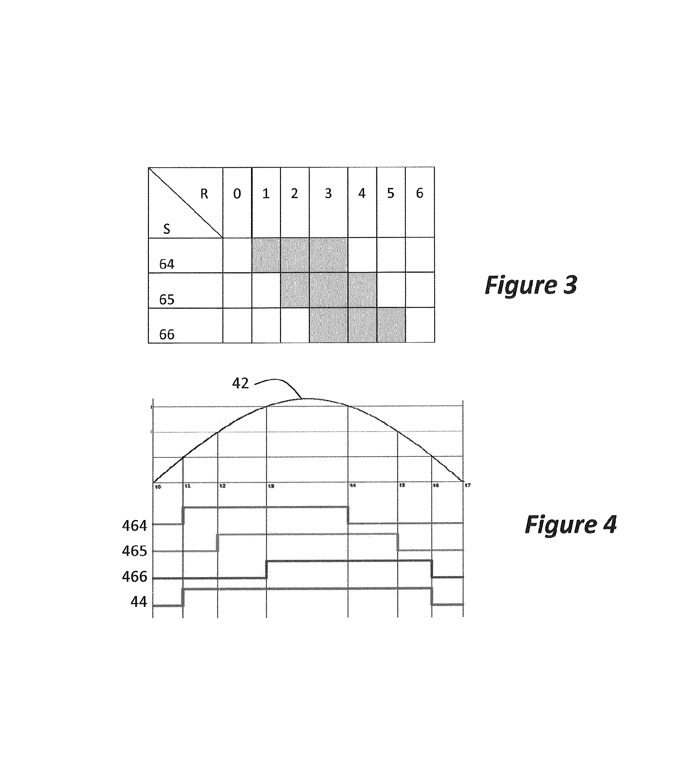

According to embodiments of the invention, a different sequence or order is used to remove the strings from the series arrangement relative to that shown in figure 2. Figure 3 shows the operating sequence of the strings of an LED circuit according to example embodiment. In the example shown in figure 3, the series arrangement of strings is of three strings S, labelled as 64, 65 and 66. In this embodiment, the strings are disconnected or unpowered in the same sequence that they were connected or powered. That is to say, whereas during the regions 1, 2 and 3, whilst the line voltage is increasing, the sequence of connection is such that string 64, then both 64 and 65, then all of 64, 65 and 66 are powered, during the decreasing part of the line voltage, the strings are disconnected or removed in the same order, such that during region 4 strings 65 and 66 are powered but string 64 is not powered and then during region 5, just string 66 is powered, whilst string 64 and 65 are not powered. It will be apparent that, according to this embodiment, each of the strings is powered for the same fraction of the mains half-cycle. A high uniformity of illumination may thereby be achieved; it may also be possible to achieve a relatively uniform ageing of the LEDs themselves.

Figure 4 shows schematically an operating sequence of a linear LED driver according an example embodiment. The figure depicts a mains line voltage 42, and the current 464, 465, and 466 to each of the LEDs strings 64, 65, and 66 respectively, over a half cycle. Finally, the figure shows at 44 the operation of the current source itself, in the case that a single current source is used throughout. In embodiments, it may be preferable to use different current sources over different parts of the cycle, as will be discussed in more detail below.

Figure 5 shows two arrangements wherein there are five strings 51, 52... 55 respectively and the AC half-cycle is split into 11 regions 0, 1 ... 10. In figure 5a is shown the operating sequence of an arrangement for 5 strings which is equivalent to that shown in figure 3 for 3 strings; at figure 5b is shown an operating sequence of the strings of an LED circuit according to another embodiment. Whereas the operating sequence shown in figure 5a may be considered as a "first on, first off" sequence, that shown in figure 5b is more complex. The arrangement of figure 5b has in common with that of figure 5a, that the number of strings in the series arrangement is sequentially increased from 0 to 5 during the increasing part of the line voltage; however, in order to add one to the total number of strings, instead of strings being added one at a time (first 51, then 52, then 53, etc.) as in the example of figure 5a, in figure 5b one or more strings may disconnected or removed, provided that at the same time the same number of strings, plus one more, are connected or added. Thus, whilst just string 53 is powered during the region 1, at the transition between region 1 and region 2, string 53 is disconnected and both strings 51 and 52 are connected. Then, at the transition between regions 2 and 3, strings 51 and 52 are both disconnected and strings 53, 54 and 55 are all connected.

Although the switching arrangement required for the operating sequence of figure 5a is more complex than that for the operating sequence of figure 5a, it may be possible to utilise a fewer number of switches, and so such a more complex switching arrangement may be more suited for some embodiments.

Figure 7a shows a schematic of an LED lighting circuit 70a according to embodiments; the circuit comprises an arrangement of three series-connected strings 64, 65 and 66. One end of string 64 is connected to the mains by means of connection rect, the other ends of the strings are connected to a driver 72 by means of taps str1 and str2, and lower connection str3. An AC power supply, which may be as shown a dimmed mains input, is provided at terminals mains1 and mains2, and rectified by rectifier 71. The rectifier may be internal to the driver 72. The driver may include a current mirror (or 1:N current divider) 73 which acts as a current source, for providing a current Iled to the LED strings through lower connection str3. The driver further includes short-circuits across each of the LEDs strings 64, 65 and 66, the short-circuits being switchable by means of switches 74, 75 and 76 respectively. The switches 74, 75 and 76 are controlled by a controller 78, which may be a digital controller having outputs str1_short, str2_short, and str3_short.

In operation, in order to remove or disconnect a particular string, say string 65 for definiteness, that string is short-circuited by closing the respective switch, in this case is switch 75. When no strings are to be connected, for instance at region 0, the current source is disabled or switched off.

It will be appreciated that, in order to implement the switching arrangement depicted in figure 5b, there is no requirement to have a short circuit across each individual string; rather, for some combinations of strings such as strings 5152 shown, it is sufficient to provide a single switchable short-circuit which short-circuits both strings together. The switch which enables and disables the short circuit must be able to withstand the voltage across not just one string but to strings in this case, and so a high-voltage switch is required. This may be traded against the reduced number of switches required.

Figure 7b shows a schematic of an LED lighting circuit 70a according to other embodiments; this circuit is generally similar to that shown in Figure 7a and so the corresponding features will not be described further. However, in this case, the driver includes short-circuits across only two of the LEDs strings 64, 65 but not across the lowest string 66. In this case, current source 73 can act as a current generator to any one of three current sources cs1, cs2 and cs3, which can be supplied to str1, str2 and str3 respectively. The skilled person will appreciate that the configuration of current source shown is illustrative only, and that other configurations for supplying one or more separately controllable current from the AC power supply are equally possible and within the scope of embodiments.

Use of separately controllable current sources cs1, cs2 and cs3 as shown in Figure 7b provides for relatively simple implementations: in the rising part of the mains voltage an extra string can be added when the (mains voltage - Vcurrent_source) equals this string voltage. The LED voltage is not constant so it is difficult to calculate this point. However when every string has its own current source this will go automatically (as will be further discussed below).

Figure 8 is a flowchart illustrating the control signals and control good logic of embodiments. The process starts at "start" 810, provided that Vrect<Vled, all the LED strings remain switched off, whilst it is polled at 816 whether the mains voltage Vrect is greater than an LED voltage Vled, that is to say, whether

$$Vrect > 1* Vled.$$

Once the mains line voltage exceeds Vled, a first LED string, string1, is switched on at 818, through a first current source. It is then polled at 820 whether the line voltage Vrect exceeds twice the LED voltage Vled, that is to say, whether

$$Vrect > 2* Vled.$$

Once the mains line voltage exceeds 2*Vled, a second LED string, string2, is switched on through a second current source at 822, such that both the first and second LED strings are on. At the same time the first current source is switched off. It is then polled at 824 whether the line voltage Vrect exceeds three times the LED voltage Vled, that is to say, whether

$$Vrect > 3* Vled.$$

Once the mains line voltage exceeds 3*Vled, a second LED string, string3, is switched on through a third current source at 826, such that first, second and third LED strings are on. At the same time the second current source is switched off.

In the specific embodiment described in figure 8, there are only three LED strings so at this stage of the mains cycle all the strings are on; in other embodiments in which there are more strings, the sequence continues as described above until all the strings are on.

The control sequence continues, by polling, at 828, whether the line voltage falls to less that three times the LED voltage, that is to say Vrect < 3* Vled. If this condition is found to be true, then a short-circuit switch thy1 is closed, at 830, to switch off string1, whilst string2 and string 3 remain on. It remains that the current is applied through the third current source.

Similarly, it is then polled, at 832, whether the line voltage falls to less than twice the LED voltage, that is to say Vrect < 2* Vled. If this condition is found to be true, then a second short- circuit switch thy2 is closed, at 834, to switch off string2, whilst string 3 remains on short- circuit switch thy1 remains closed so string1 remains switched off. It remains that the current is applied through the third current source.

It is then polled, at 836, whether Vrect < Vled. Once this is true the third string is switched off at 838, which in embodiments may be by switching the third current source off. In practice, since Vrect is now less the Vled, the string will normally switch off automatically, as there is insufficient voltage across it for it to operate. In other embodiments the third string may be short-circuited through a further short-circuit switch thy3.

Once the line voltage Vrect falls below the second reference voltage Vref2, shown at 840, the short-circuit switches will open, since there is insufficient voltage or current to maintain them closed. Thereafter, at 842, all the LED strings are off and the short-circuit switches are open. The cycle then restarts at 812.

Whereas in other embodiments a single current source is used to power any combination of strings, in embodiments such as that described with reference to figure 8, separate current sources are as additional strings are added. Such embodiments are convenient to implement, since, in the rising part of the mains voltage an extra string can be added when the (mains voltage - Vcurrent_source) equals this string voltage. But the LED voltage is not exactly constant, but can vary with operating temperature, operating current etc., so it is difficult to calculate this point. However when every string - or rather, every combination of strings (that is to say string1 , string 1 + string 2, and string1 + string 2 + string 3) has its own current source this will happen automatically. In contrast, if opening of previously-closed short-circuit switches is used to increase the number of strings, it is necessary to estimate what is the best time - or equivalently, the best voltage - to open the switch. That is more complicated. Nonetheless, during the rising slope of the mains it is sufficient to observe that the voltage across the current source approached zero, and with that information the timing of opening a switch could be determined.

It will be realised that the various currents and voltages associated with figure 8. are shown in Figure 4. The mains line voltage is shown at 42. At 464, 465 and 466 are shown, respectively, the currents through string1, string2 and string3. It should be noted that the figure is simplified in that the rise in current from it's off-state to its on-state is not shown in the figure. In general, due to the operating characteristics of LED strings, this rise will be relatively sharp.

It will be appreciated that as used herein, the term "disconnect" is not limited to physical isolation, by for instance, including an air gap into the circuit, but includes being bypassed by for instance providing an alternative, short-circuit path. Similarly, it will be apparent that "remove" is not be interpreted so as to require physical removal or displacement, but includes logical removal, for instance by providing a short-circuit or other bypass route,

From reading the present disclosure, other variations and modifications will be apparent to the skilled person. Such variations and modifications may involve equivalent and other features which are already known in the art of linear LED drivers, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom. For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

**Claims**

1. A method of driving current from an AC power supply through a series arrangement of a varying number of strings of LEDs, the method comprising, adding LED strings to the series arrangement in a first order during an increasing voltage part of a cycle of the AC power supply cycle and subsequently removing LED strings from the series arrangement in a second order s during a decreasing voltage part of the cycle, wherein the second order is not the reverse of the first order.

2. The method of claim 1, wherein the second order is the same as the first order.

3. The method of claim 1 or 2, comprising switching a short-circuit across a string of LEDs to remove that string of LEDs.

4. The method of any preceding claim, comprising switching between two current sources to add a string of LEDs.

5. A driver for driving current from an AC power supply through a series arrangement of a varying number of strings of LEDs by adding LED strings to the series arrangement during an increasing voltage part of a cycle of an AC power supply cycle and subsequently removing LED strings from the series arrangement strings of LEDs during a decreasing voltage part of the cycle, the driver comprising at least one short-circuit connection configured to be switchably connected across a one of the strings of LEDs, and at least one current source configured to be connected to the series arrangement, and being configured to add the LED strings in a first order and remove LED strings in a second order which is not the reverse of the first order.

6. A driver as claimed in claim 5, wherein the second order is the same as the first order.

7. A driver as claimed in claim 5 or 6, configured to switch a short-circuit connection across a string of LEDs to remove that string of LEDs.

8. A driver as claimed in claim 5 or 6, configured to switch between two current sources adds a string of LEDs.

9. An integrated circuit comprising a driver as claimed in any of claims 5 to 8.

10. A driver for driving current from an AC power supply through a series arrangement of a varying number of strings of LEDs, the number of strings of LEDs being varied by adding LED strings to the series arrangement in a first order and subsequently removing LED strings from the series arrangement in a second order, the driver comprising a plurality of switches each configured to short-circuit at least one of the stings of LEDs.

11. A driver configured to operate a method according to any of claims 1 to 5.

**Amended claims in accordance with Rule 137(2) EPC.**

**1.** A method of driving current from an AC power supply (mains1, mains2) through a series arrangement of a varying number of strings (64, 65, 66) of LEDs, the method comprising,
adding LED strings to the series arrangement in a first order during an increasing voltage part of a cycle of the AC power supply cycle and subsequently removing LED strings from the series arrangement in a second order s during a decreasing voltage part of the cycle,
wherein the second order is not the reverse of the first order.

**2.** The method of claim 1, wherein the second order is the same as the first order.

**3.** The method of claim 1 or 2, comprising switching a short-circuit across a string of LEDs to remove that string of LEDs.

**4.** The method of any preceding claim, comprising switching between two current sources to add a string of LEDs.

**5.** A driver (72) for driving current from an AC power supply through a series arrangement of a varying number of strings (64, 65, 66) of LEDs by adding LED strings to the series arrangement during an increasing voltage part of a cycle of an AC power supply cycle and subsequently removing LED strings from the series arrangement strings of LEDs during a decreasing voltage part of the cycle,
the driver comprising
at least one short-circuit connection (74, 75, 76) configured to be switchably connected across a one of the strings of LEDs, and
at least one current source (73) configured to be connected to the series arrangement,
and being configured to add the LED strings in a first order and remove LED strings in a second order which is not the reverse of the first order.

**6.** A driver as claimed in claim 5, wherein the second order is the same as the first order.

**7.** A driver as claimed in claim 5 or 6, configured to switch a short-circuit connection across a string of LEDs to remove that string of LEDs.

**8.** A driver as claimed in claim 5 or 6, configured to switch between two current sources adds a string of LEDs.

**9.** An integrated circuit comprising a driver as claimed in any of claims 5 to 8.

**10.** A driver (72) for driving current from an AC power supply through a series arrangement of a varying number of strings of LEDs, the number of strings of LEDs being varied by adding LED strings to the series arrangement in a first order and subsequently removing LED strings from the series arrangement in a second order,
the driver comprising
a plurality of switches (74, 75, 76) each configured to short-circuit at least one of the stings of LEDs.

**11.** A driver configured to operate a method according to any of claims 1 to 5.

**12.** A lighting circuit comprising a driver according to any of claims 5 to 11 and a plurality of LED strings.

**Figure 1**

**Figure 2**

| S \ R | R | 0 | 1 | 2 | 3 | 4 | 5 | 6 |
|-------|---|---|---|---|---|---|---|---|
| 64 |  |  |  |  |  |  |  |  |
| 65 |  |  |  |  |  |  |  |  |
| 66 |  |  |  |  |  |  |  |  |

*Figure 3*

42

*Figure 4*

464

465

466

44

| S \ R | 0 | 1 | 2 | 3 | 4 | 5 | 6 | 7 | 8 | 9 | 10 |
|---|---|---|---|---|---|---|---|---|---|---|---|
| 51 |  | ▓ | ▓ | ▓ | ▓ | ▓ |  |  |  |  |  |
| 51 |  |  | ▓ | ▓ | ▓ | ▓ | ▓ |  |  |  |  |
| 53 |  |  |  | ▓ | ▓ | ▓ | ▓ | ▓ |  |  |  |
| 54 |  |  |  |  | ▓ | ▓ | ▓ | ▓ | ▓ |  |  |
| 55 |  |  |  |  |  | ▓ | ▓ | ▓ | ▓ | ▓ |  |

*Figure 5a*

| S \ R | 0 | 1 | 2 | 3 | 4 | 5 | 6 | 7 | 8 | 9 | 10 |
|---|---|---|---|---|---|---|---|---|---|---|---|
| 51 |  |  | ▓ |  | ▓ | ▓ | ▓ | ▓ |  |  |  |
| 52 |  |  | ▓ |  | ▓ | ▓ | ▓ | ▓ |  |  |  |
| 53 |  | ▓ |  | ▓ |  | ▓ |  | ▓ |  | ▓ |  |
| 54 |  |  |  | ▓ | ▓ | ▓ | ▓ |  | ▓ |  |  |
| 55 |  |  |  | ▓ | ▓ | ▓ | ▓ |  | ▓ |  |  |

*Figure 5b*

*Figure 6*

*Figure 7a*

*Figure 7b*

Figure 8

Europäisches
Patentamt
European
Patent Office
Office européen
des brevets

**EUROPEAN SEARCH REPORT**

Application Number

EP 12 16 2050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/057115 A2 (EXPRESS IMAGING SYSTEMS LLC [US]; REED WILLIAM G [US]) 20 May 2010 (2010-05-20) * pages 3-13,19, * * figures * | 1-3,5-11 | INV. H05B33/08 |
| X | WO 2010/141684 A1 (EXCLARA INC [US]; SHTEYNBERG ANATOLY [US]; ZHOU DONGSHENG [US]; RODRIG) 9 December 2010 (2010-12-09) * page 69 * * figures * | 1-3,5-11 | |
| X | US 2010/308739 A1 (SHTEYNBERG ANATOLY [US] ET AL) 9 December 2010 (2010-12-09) * paragraph [0164] * * figures * | 1-3,5-11 | |
| X | US 2011/227484 A1 (HUYNH STEVEN [US]) 22 September 2011 (2011-09-22) * paragraphs [0061] - [0062] * * figures 16-18 * | 1-3,5-11 | |
| | | | TECHNICAL FIELDS SEARCHED (IPC) |
| | | | H05B |

The present search report has been drawn up for all claims

| Place of search | Date of completion of the search | Examiner |
|---|---|---|
| Munich | 25 February 2013 | Maicas, Jesús |

EPO FORM 1503 03.82 (P04C01)

**ANNEX TO THE EUROPEAN SEARCH REPORT
ON EUROPEAN PATENT APPLICATION NO.**                    EP 12 16 2050

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-2013

| Patent document cited in search report | | Publication date | Patent family member(s) | | Publication date |
|---|---|---|---|---|---|
| WO 2010057115 | A2 | 20-05-2010 | EP | 2364575 A2 | 14-09-2011 |
| | | | JP | 2012509558 A | 19-04-2012 |
| | | | KR | 20110094315 A | 23-08-2011 |
| | | | US | 2010123403 A1 | 20-05-2010 |
| | | | WO | 2010057115 A2 | 20-05-2010 |
| WO 2010141684 | A1 | 09-12-2010 | CN | 102498449 A | 13-06-2012 |
| | | | EP | 2438494 A1 | 11-04-2012 |
| | | | JP | 2012529124 A | 15-11-2012 |
| | | | US | 2010308738 A1 | 09-12-2010 |
| | | | WO | 2010141684 A1 | 09-12-2010 |
| US 2010308739 | A1 | 09-12-2010 | TW | 201143519 A | 01-12-2011 |
| | | | US | 2010308739 A1 | 09-12-2010 |
| US 2011227484 | A1 | 22-09-2011 | CN | 102196627 A | 21-09-2011 |
| | | | CN | 201758472 U | 09-03-2011 |
| | | | CN | 201995158 U | 28-09-2011 |
| | | | US | 2011227484 A1 | 22-09-2011 |
| | | | US | 2011227485 A1 | 22-09-2011 |
| | | | US | 2011227490 A1 | 22-09-2011 |

EPO FORM P0459

For more details about this annex : see Official Journal of the European Patent Office, No. 12/82